# EUROPEAN PATENT APPLICATION

(11) **EP 3 139 362 A1**
(43) Date of publication of application: **08.03.2017**
(21) Application number: 15002575.7
(22) Date of filing: 02.09.2015
(51) Int. Cl.: G09B 23/28

(54) **MEDICAL SIMULATOR, MEDICAL SIMULATION METHOD AND USE**

(71) Applicant: Medability GmbH, 80337 München (DE)
(72) Inventor: Stefan, Philipp, 81377 München (DE); Wucherer, Patrick, 81369 München (DE); Weidert, Simon, 80469 München (DE)
(74) Representative: Stellbrink & Partner Patentanwälte mbB

(57) **Abstract**

The present invention relates to a medical simulator comprising a medical instrument and a force feedback system adapted to provide force feedback in at least five degrees of freedom, wherein the force feedback system is connected to the medical instrument. The present invention also relates to a medical simulation method comprising the step of providing the medical simulator and to the use of the medical simulator or the medical simulation method.

## Description

The present invention relates to a medical simulator, a medical simulation method and a use thereof.

Medical simulators are per se known. For example, DE 10 2013 004 843 A1 discloses a medical simulation system to simulate a medical intervention. To do so, a medical instrument, such as a trocar, is mounted to a haptic device providing force feedback to the medical instrument. This may provide some force feedback to the medical device and may simulate a medical intervention.

While the simulation method disclosed in DE 10 2013 004 843 A1 may be useful in some regards, it has certain shortcomings and drawbacks. One of the drawbacks may be that the simulation system may not "feel" completely realistic to the user - that is, the medical simulation provided in DE 10 2013 004 843 A1 may not provide the user with a scenario that the user considers as appropriate or realistic. This may be disadvantageous for a variety of reasons: training using such a medical simulator may be far from optimal as regards the acquired skills. The user may be less motivated when he does not regard the training as realistic.

It is an object of the present invention to overcome or at least alleviate the shortcomings and disadvantages of the prior art. More particularly, it is an object of the present invention to provide a medical simulator, a medical simulation method and a use being more realistic to thereby provide better training as regards medical procedures which may be new to the user and as regards the training with equipment which may be new to the user.

These objects are met by the medical simulator, the medical simulation method and the use of the present invention.

According to a first aspect, the present invention relates to a medical simulator. The medical simulator comprises a medical instrument and a force feedback system, the force feedback system being connected to the medical instrument. Preferably, the force feedback system is adapted to provide force feedback in at least five degrees of freedom. For example, where the medical instrument is a trocar or another substantially elongate medical instrument, the force feedback system may be adapted to provide force feedback five degrees of freedom relating to the translational position of the medical instrument and to the pivoting or tilting position of the medical instrument. Additionally, the force feedback system may be adapted to provide force feedback against a rotation of the medical instrument along its longitudinal axis. With such a medical simulator, it is possible to provide a much more realistic medical simulation. In particular, it may be possible to "lock" the medical instrument to certain movements, depending on a simulated position of the medical instrument, i.e. to disallow certain movements by the force applied by the force feedback system depending on the position of the medical instrument.

The force feedback system connected to the medical instrument may have different designs: according to a first embodiment, the force feedback system may comprise first and second haptic devices connected to the medical instrument at different locations, wherein each haptic device is adapted to provide a force feedback in two or three (potentially also four) degrees of freedom. Alternatively, the force feedback system may only comprise one haptic device adapted to provide force feedback to the medical instruments in five or six (potentially also seven) degrees of freedom. Both embodiments may be suitable embodiments for the present invention. According to one embodiment, a housing or box may be provided. The haptic devices may be positioned within and/or on said box or housing. This provides a particularly well contained medical simulator resistant against being polluted and being damaged.

The medical simulator may also comprise a sound output that provides an audible output in dependence of a location and/or orientation of the medical instrument. For example, the simulator may comprise a data processing means and a data storage means having a data set representative of bodily tissue. A position (such as the proximal end section) of the medical instrument within said data set may be simulated. Dependent on where said proximal end section of the medical instrument is within the data set, the audible or sound output may be altered. This may provide a particularly advantageous training or simulation apparatus. Furthermore, the force or haptic feedback may also be altered dependent on the (simulated) location and orientation of the medical instrument within the data set.

According to one embodiment, a plurality of medical instruments and a plurality of force feedback systems may be provided. Preferably, such force feedback systems are provided on and/or in one housing or box. With such a medical simulator, it is possible to simulate more complicated or complex medical interventions performed on a patient requiring usage of a plurality of instruments or requiring more than one medical doctor at a time.

The present invention also relates to a medical simulation method preferably employing the medical simulator. Within such a method, force feedback may be provided in at least five degrees of freedom, such as five or six degrees of freedom. In particular, the method may comprise the step of restricting the medical instrument to a movement along a longitudinal direction of the medical instrument by the force feedback. This step may also be referred to as a locking step. Preferably, such a step is performed when a simulated position of a portion of the medical instrument is located within a portion of a data set representing bony tissue. In contrast, if the simulated portion of the medical instrument is not located within a portion of a data set representing bony tissue, the medical instrument may be unlocked, e.g., pivoting of the medical instrument and/or displacing the medical instrument transversely to its longitudinal axis may be allowed. Such a method may provide a very realistic simulation of a medical procedure.

The present invention also relates to versatile uses of the medical simulator and the medical simulation method, including the use of training of medical interventions, the presentation of a medical instrument and the training of medical personnel with an instrument unfamiliar or unknown to the medical personnel.

The present invention is also defined by the following aspects:
S1. Medical simulator comprising
   a medical instrument,
   a force feedback system adapted to provide force feedback in at least five degrees of freedom,
   wherein the force feedback system is connected to the medical instrument.
S2. The medical simulator according to aspect 1,
   wherein the force feedback system is adapted to provide force feedback in five, six or seven degrees of freedom.
S3. The medical simulator according to any of the preceding aspects,
   wherein the force feedback system comprises a first haptic device adapted to provide force feedback and a second haptic device adapted to provide force feedback,
   wherein the medical instrument is connected to the first haptic device at a first connection location and to the second haptic device at a second connection location distanced from the first location, wherein preferably one of the first and second haptic device is adapted to provide force feedback in 3 degrees of freedom and the other of the first and second haptic device is adapted to provide force feedback in 2 or 3 degrees of freedom, wherein the medical simulator is thereby preferably adapted to provide force feedback to translational movement of the medical instrument and to tilting or pivoting movement of the medical instrument.
S4. The medical simulator according to the preceding aspect, wherein the medical simulator is further adapted to detect a rotational position of the medical instrument, preferably with regard to rotation around a longitudinal axis of medical instrument, and/or wherein at least one of the first and second haptic devices is further adapted to provide force feedback against a rotation of the medical instrument, the rotation preferably being a rotation around the longitudinal axis of the medical instrument.
S5. The medical simulator according to any of the 2 preceding aspects,
   wherein the first haptic device is connected to the medical instrument at a first end section of the instrument and the second haptic device is connected to the medical instrument at a second end section of the instrument.
S6. The medical simulator according to any of the 3 preceding aspect,
   wherein the simulator further comprises a housing,
   wherein the first haptic device is located in the space defined by said housing and the second haptic device is located on said housing,
   wherein the medical instrument extends from a location outside said housing to a location within said space defined by said housing,
   wherein the first connection location is located in the space defined by said housing and the second connection location is located outside said housing.
S7. The medical simulator according to the preceding aspect,
   wherein the housing comprises a plate comprising an aperture, wherein the second haptic device is located on said plate and wherein the medical instrument extends through the aperture.
S8. The medical simulator according to any of the aspects S1 to S2, wherein the force feedback system comprises a haptic device adapted to provide force feedback in five, six or seven degrees of freedom.
S9. The medical simulator according to the preceding aspect, wherein the haptic device is adapted to provide force feedback in five or six degrees of freedom to provide force feedback to translational movement of the medical instrument and to tilting or pivoting movement of the medical instrument
   and wherein the medical simulator is further adapted to detect a rotational position of the medical instrument, preferably with regard to rotation around a longitudinal axis of medical instrument, and/or wherein the haptic device is further adapted to provide force feedback against a rotation of the medical instrument, the rotation preferably being a rotation around the longitudinal axis of the medical instrument.
S10. The medical simulator according to any of the two preceding aspect,
   wherein the simulator further comprises a housing and the haptic device is positioned inside said housing or on said housing.
S 11. The medical simulator according to the preceding aspect, wherein the haptic device is positioned on said housing, wherein said housing comprises a plate comprising an aperture, wherein the haptic device is located on said plate and wherein the medical instrument extends through the aperture.
S12. The medical simulator according to any of the preceding aspects, wherein the medical instrument is connected to the force feedback system by one or more ball and socket connections.
S13. The medical simulator according to any of the preceding aspects, wherein the medical instrument is a trocar (also referred to as working cannula with stylet or Jamshidi needle).
S14. The medical simulator according to any of the preceding aspects with the features of aspects S3 or S8, wherein one haptic device and preferably each haptic device comprises a base, a platform member and a plurality of connection members connecting the platform member with the base.
S15. The medical simulator according to the preceding aspect and with the features of aspect S3, wherein the bases of the first and second haptic devices are oriented transversely to one another.
S 16. The medical simulator according to any of the preceding aspects, wherein the medical simulator is adapted to determine the position and/or orientation of the medical instrument.
S17. The medical simulator according to any of the preceding aspects, wherein the simulator further comprises a data processing means and a data storage means, wherein the data storage means includes a data set representative of bodily tissue and wherein the simulator is adapted to simulate a location of a portion of the medical instrument within said data set.
S18. The medical simulator according to the preceding aspect, wherein the data set representative of bodily tissue is a data set representing radio density of the bodily tissue, e.g. obtained by computer tomography.
S 19. The medical simulator according to any of the 2 preceding aspect, wherein the simulator is adapted to adapt the force feedback in dependence of the location of the portion of the medical instrument within said data set.
S20. The medical simulator according to any of the 3 preceding aspects, wherein the simulator further comprises a sound output and the simulator is adapted to adapt an output sound in dependence of the location of the portion of the medical instrument within said data set.
S21. The medical simulator according to any of the 4 preceding aspects, wherein the simulator further comprises a visual data output means outputting an image representative of the data set and the location of the medical instrument within said data set.
S22. The medical simulator according to any of the 5 preceding aspects, wherein the data set includes data relating to a vertebra.
S23. Medical simulator according to any of the preceding aspects, wherein the simulator comprises
   a plurality of medical instruments,
   a plurality of force feedback systems, wherein the number of medical instruments equals the number of force feedback systems,
   wherein each force feedback system is connected to one medical instrument.
S24. Medical simulator according to the preceding aspects,
   wherein the medical simulator comprises any of the feature set out in aspects S2 to S21 for at least one of the combinations of one medical instrument and one force feedback system.
S25. Medical simulator according to aspect S23,
   wherein the medical simulator comprises any of the feature set out in aspects S2 to S21 for each of the combinations of one medical instrument and one force feedback system.
S26. Medical simulator according to any of the 4 preceding aspects, wherein each of the number of medical instruments and the number of force feedback systems is 2.
S27. Medical simulator according to any of the preceding aspects, wherein the medical simulator further comprises at least one camera adapted and positioned to detect the medical instrument(s) and movements of the medical instrument(s) and/or wherein the at least one camera is adapted and positioned to detect additional instruments introduced into the medical instrument(s) and movements of the additional instruments.
M1. Medical simulation method comprising the step of
   providing a medical simulator according to any of the preceding aspects.
M2. Method according to the preceding aspect and further comprising the step of
   providing a three-dimensional data set representative of bodily tissue.
M3. Method according to any of the preceding method aspects and further comprising the step of
   determining a position of a portion of the medical instrument.
M4. Method according to the preceding aspect, wherein the portion of the medical instrument is a proximal end.
M5. Method according to any of the two preceding aspects and further comprising the step of simulating a position of the portion of the medical instrument within the data set.
M6. Method according to any of the three preceding aspect and further comprising the step of providing force feedback to the medical instrument, the force feedback depending on the position of the simulated position within the data set.
M7. Method according to any of the preceding method aspects and further comprising the step of
   restricting movement and/or rotation of the medical instrument by the force feedback.
M8. Method according to the preceding aspect,
   wherein said restriction is a restricting to movement along a longitudinal direction of the medical instrument.
M9. Method according to any of the two preceding aspects with the features of aspects M2 and M5, wherein said restriction occurs, when a simulated position of a portion of the medical instrument is located within a portion of the data set representing a particular kind of tissue, such as bone tissue.
M10. Method according to any of the preceding method aspects with the features of aspects M2 and M5 and further comprising the step of
   providing a visual output of the three-dimensional data set and a simulated position of the medical instrument.
M11. Method according to any of the preceding method aspects with features of aspects M2 and M5 and further comprising the step of
   providing an audible output in dependence of the simulated position of the portion of the medical instrument within the data set.
M12. Method according to any of the preceding method aspects, wherein the medical simulation method simulates a diagnostic and/or interventional procedure.
M13. Method according the preceding aspect, wherein the diagnostic and/or interventional procedure is at least one of orthopedic or trauma surgery, interventional radiology, endoscopy and image-guided surgery.
M14. Method according to any of the two preceding method aspects, wherein the diagnostic and/or interventional procedure uses imaging data from computed tomography (CT), magnetic resonance imaging (MRI), ultrasound, positron emission tomography (PET), single-photon emission computed tomography (SPECT), optical coherence tomography (OCT), or combinations thereof.
M15. Method according to any of the preceding method aspects, wherein the medical simulation method simulates at least one of a tumor resection, a vertebroplasty, a kyphoplasty, a pain therapy and a biopsy and preferably a tumor ablation.
S24. Medical simulator adapted to carry out the method according to any of the preceding method aspects.
U1. Use of the medical simulator or the medical simulation method according to any of the preceding aspects.
U2. Use according to the preceding aspect, said use being a training of medical personnel for training a medical intervention.
U3. Use according to aspect U1, said use being a presentation of a medical instrument.
U4. Use according to any of the aspects U1 and U3, said use being a training of medical personnel with an instrument unfamiliar to the medical personnel.

Detailed embodiments of the present invention will now be described with reference to the accompanying drawings.
Figures 1a to 1g depict a medical intervention that may be performed in reality and that may be simulated.
Figure 2 depicts a front view with a partial phantom view of a first embodiment.
Figure 3 depicts a front view of the first embodiment.
Figure 4 depicts a front view, which is a partial phantom view, of a second embodiment.
Figure 5 depicts a front view of the second embodiment.
Figure 6 depicts the second embodiment, where substantial parts of the medical simulator have been removed for clarity.
Figure 7 depicts a top view on the second embodiment.
Figure 8 depicts a plate to be used with first and second embodiments.
Figure 9 depicts a medical instrument and coordinate systems illustrating the possible movements of the medical instrument.

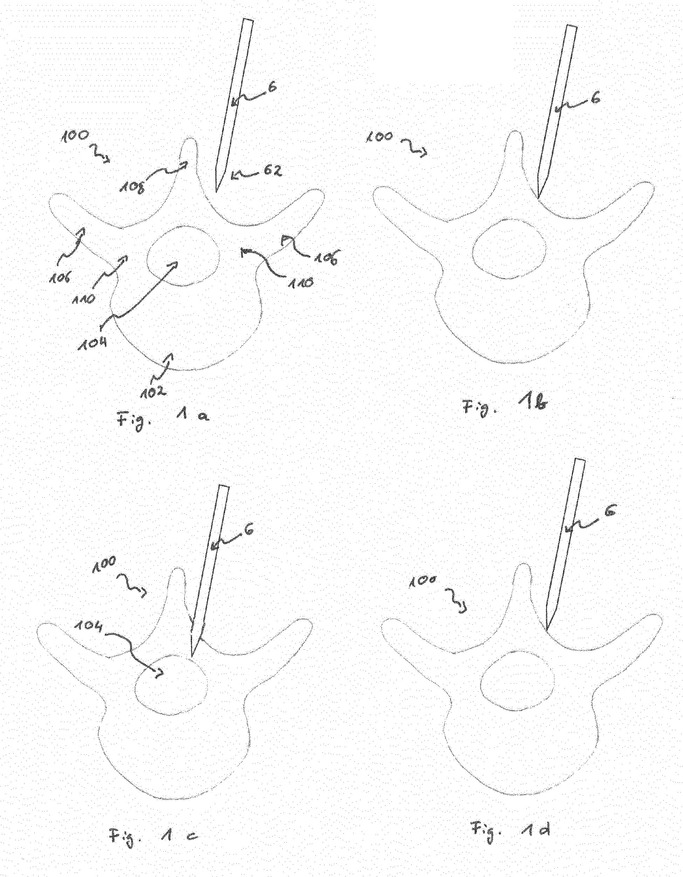

To better understand the non-optimal realism of prior art medical simulators, a medical procedure will first be described with references to Figures 1a to 1g. The described medical procedure is a real medical procedure but may also be simulated by a medical simulator. Figures 1a to 1g depict a medical instrument 6 (e.g., a trocar) and a vertebra 100 in a cross-sectional view through the vertebra 100. The vertebra 100 comprises a vertebra body 102, a spinal cord 104, two transverse processes 106, one spinous process 108 and two pedicles 110. The vertebra 100 is surrounded by other tissue (e.g., muscular tissue, connective tissue and others) not depicted in Figures 1a to 1g. The tissue surrounding the vertebra is typically softer than the vertebra itself.

In different medical procedures, it is desirable to introduce a medical instrument, such as a trocar 6, which may also be referred to as working cannula with stylet or Jamshidi® needle, into the vertebra 100 and more particularly in such a way that the proximal end 62 of the medical instrument 6 is located within the vertebra body 102. In this regard, it is noted that the term "proximal" denotes the portion being closer to the patient, i.e. coming into contact with the patient before other portions. One example for an medical intervention where a medical instrument, such as a trocar 6, is to be placed into a vertebra 100 is local tumor ablation. Other such procedures to be simulated include tumor resection, vertebroplasty, kyphoplasty, pain therapy and biopsy.

During such medical procedures, the trocar is inserted into the patient's body through the patient's skin and advanced through the softer tissue (Figure 1a) until it contacts the patient's vertebra (Figure 1b). At this point, the user, that is typically a medical doctor or other medical personnel, feels the harder vertebra 100 and notices that further advancing the medical instrument 6 is harder, i.e. a higher force is needed to further advance the medical instrument 6.

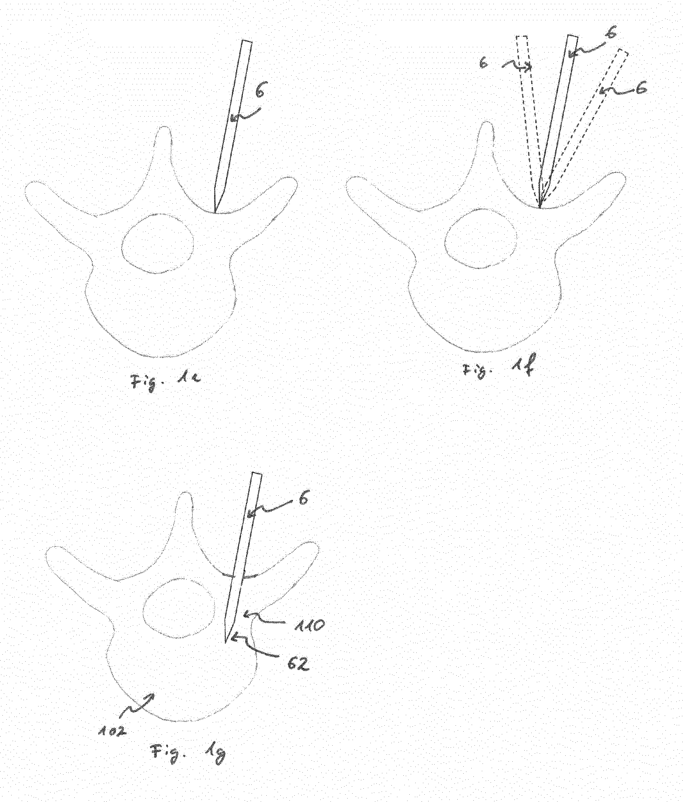

If now further advancing the medical instrument (as depicted in Figure 1c), the medical instrument 6 becomes "locked" within the vertebra 100. That is, the user may no longer be able to pivot the medical instrument 6, but may merely further advance the medical instrument 6 or retract it. That is, the motion of the medical instrument is limited to one dimension. As can be seen in Figure 1c, the medical instrument 6 is inserted into the vertebra 100 such that, if the medical instrument 6 is further advanced, it will contact the spinal cord 104, which, in most medical procedures, is undesirable, as it may harm the spinal cord 104 and cause substantial pain to the patient. If such a situation is encountered during a medical procedure, the medical personnel would have to retract the medical instrument 6 and try to find a better position of the medical instrument 6. In Figure 1d, the medical instrument 6 is retracted again, such that it merely contacts the vertebra 100. In such a situation, the user of the medical instrument 6 would laterally shift the medical instrument 6 to more suitable location (Figure 1e). That is, the user would move the medical instrument 6 along the outer boundary of the vertebra 100 in parallel to the outer boundary. The user may also alter the relative orientation of the medical instrument 6, e.g., by pivoting it (see Figure If). Here, the pivoting of the medical instrument 6 is shown by the orientations of the medical instrument 6 depicted in dashed lines. Once the ideal orientation of the medical instrument 6 has been found, the medical instrument 6 may be further advanced into the vertebra 100 and particularly in such a way that the proximal end 62 of the medical instrument 6 is advanced further to be located within the vertebral body 102 (see Fig. 1g).

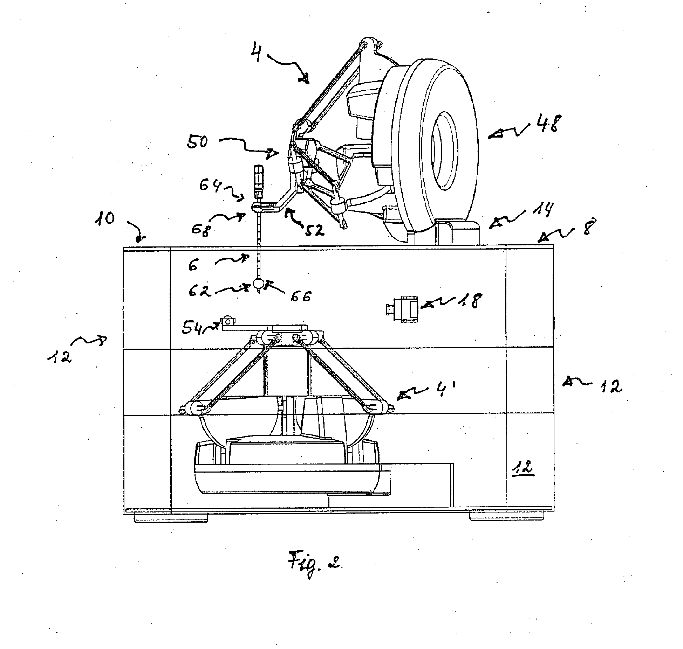

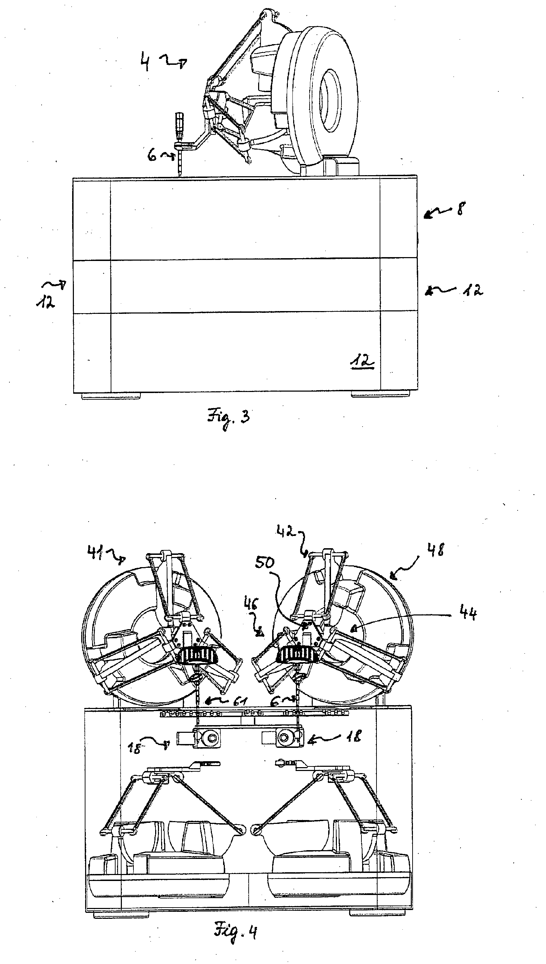

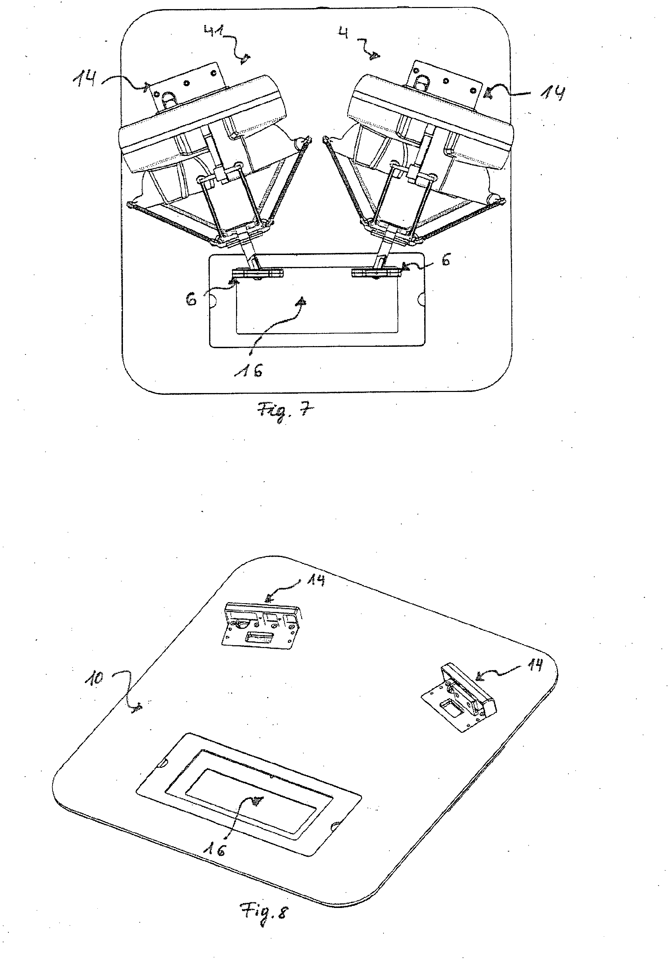

Embodiments of the present invention are directed to realistically simulate a medical intervention as described above with reference to Figures 1a to 1g. Figure 2 depicts a medical simulator 2 in accordance with one embodiment of the present invention. Medical simulator 2 comprises a first haptic device 4, a second haptic device 4' and a medical instrument 6. In the depicted embodiment, the medical instrument 6 is a trocar 6. Furthermore, a housing or box 8 is provided having one or more sidewalls 12 (though a plurality of sidewalls 12 is depicted, the skilled person will understand that also only one, e.g. circular or oval sidewall, may be provdied) and a top plate 10. Each haptic device 4, 4' is adapted to provide a force feedback. More particularly, the haptic device 4 may provide a haptic feedback to the trocar 6 which is connected to the haptic device 4. Each haptic device 4, 4' comprises a base 48 and connection members 42, 44, 46 (see Figure 4) interconnecting the base with a platform member 50. Each connection member 42, 44, 46 may comprise two leg members. First haptic device 4 is mounted to top plate 10 of box 8 by mounting member 14 - see Figure 2 and Figure 8, which Figure 8 only depicts the top plate 10 having an aperture 16 and two mounting members 14 for mounting two haptic devices 4. The platform member 50 of the top haptic device 4 is connected to the surgical instrument 6, preferably to a distal end section of medical instrument 6. The connection is preferably provided by means of an extension 52.

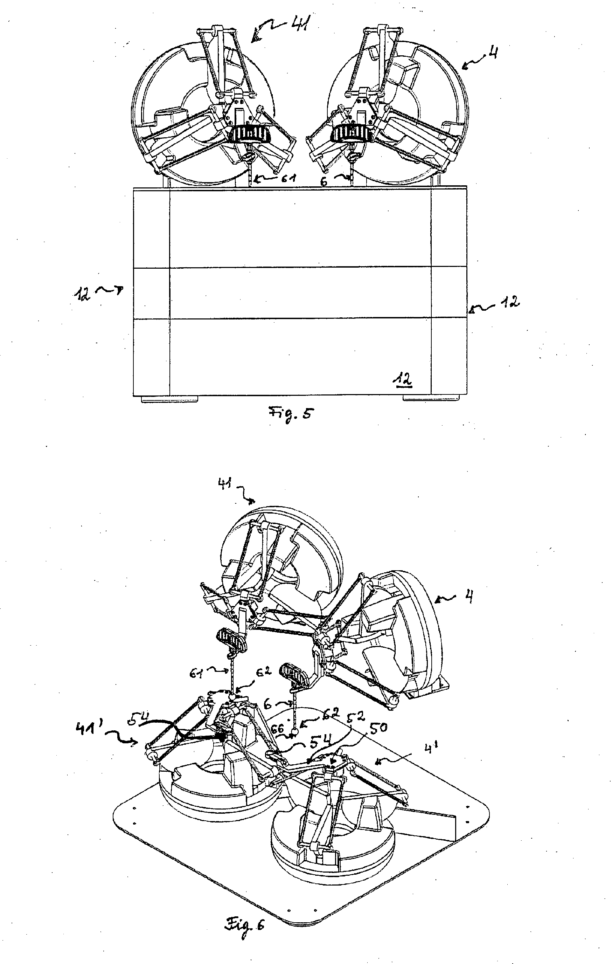

The medical instrument 6 extends through plate 10 of box 8. For this purpose, an aperture 16 (see Figure 8) is provided in top plate 10. The proximal end 62 is connected to platform member 50 of haptic device 4', e.g. by means of an extension 52 - see Figure 6, where the box and the mounting members 14 have been removed for a better illustration. In the depicted embodiment, the proximal end 62 of the medical instrument 6 comprises a ball 66. In use, this ball is placed in a correspondingly sized socket 54 located at extension 52. Thus, the proximal end 62 of medical instrument 6 is connected to haptic device 4' placed in the box 12. However, other connection means are also possible.

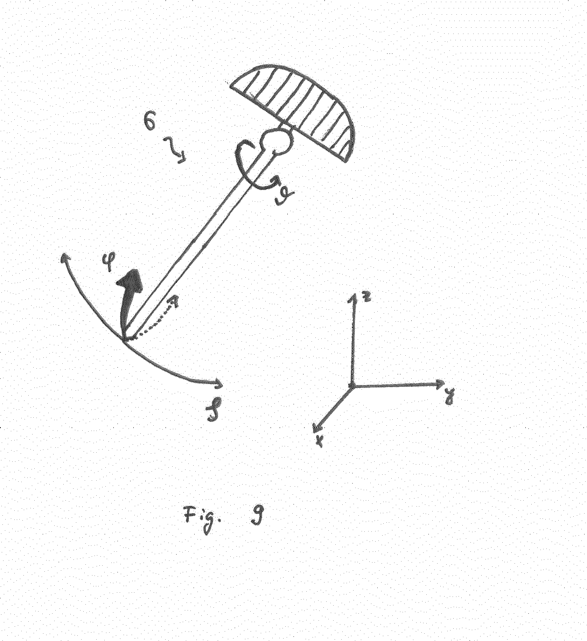

In the embodiment depicted in Figure 2, the medical simulator 2 comprises two haptic devices 4, 4'. Each haptic device is adapted to provide a force feedback in three translational dimensions or directions. That is, in total, haptic feedback in six translational degrees of freedom can be provided to the medical instrument 6 - that is haptic feedback in three translational degrees of freedom to the distal end 64 and haptic feedback in three translational degrees of freedom to proximal end 62. As distal end 64 and proximal end 62 of medical device or instrument 6 are connected to one another, haptic feedback in only five translational degrees of freedom would be sufficient to provide haptic feedback sufficient for the translational position of the medical instrument 6 and the orientation of the medical instrument 6 (except for the rotation along the longitudinal axis of the instrument 6). In this regard, reference is made to Fig. 9. Herein, the medical instrument 6 and different coordinates are depicted. As will be understood, the position and orientation of the medical instrument 6 may be fully described, e.g., by means of three translational coordinates x, y, z and three rotational coordinates ρ,ϕ,ϑ. x, y and z describe the translational position of the medical instrument 6, e.g. of one end section of the medical instrument 6 and ρ, ϕ*,* ϑ describe the orientation of the medical instrument 6, wherein ρ, ϕ described the "external" tilting or pivoting of the medical instrument 6 and ϑ describes the "internal" rotation of the medical instrument 6 around its longitudinal axis or longitudinal direction.

That is, the position and exact orientation of the medical instrument 6 can be fully described by six degrees of freedom or six dimensions - three relating to the translational position of the medical instrument 6 in the three-dimensional space and three relating to the orientation of the medical instrument.

In some embodiments, the rotation of the medical instrument 6 around its longitudinal direction (i.e. the rotation described by ϑ in Fig. 9) is of no particular interest. In such embodiments, it may be sufficient to provide haptic feedback in only five dimensions or degrees of freedom, e.g. in three translational degrees of freedom and two degrees of freedom relating to the orientation of the medical instrument 6 (that is the tilting or pivoting described by ρ, ϕ in Fig. 9). In such embodiments, the provision of haptic feedback in five degrees of freedom is sufficient (e.g. having one haptic device 4, 4' providing haptic feedback in three degrees of freedom and having one haptic device 4', 4 providing haptic feedback in two degrees of freedom). In other words, there may be provided one or more haptic devices having a total of five degrees of freedom, that is, giving force feedback in five degrees of freedom. This can be achieved either by means of providing two haptic devices 4, 4' one of which has three degrees of freedom and one of which has 2 degrees of freedom or by the provision of one haptic device (not depicted) having a total of five degrees of freedom, i.e. providing force feedback in five degrees of freedom.

However, in other embodiments, the rotation of the medical instrument 6 around its longitudinal axis or direction may be of interest. In such embodiments, the haptic system may be adapted to measure and/or control the rotation described by ϑ, i.e. the rotation around the longitudinal axis or direction of the medical instrument 6. This may be achieved, e.g. by means of the ball and socket joint depicted in Fig. 2 at 64. More particularly, e.g., the ball 68 may have a coloring or another indication that may be detected, e.g. by means of a camera (not depicted) to measure the rotational position of the medical instrument 6 around its longitudinal axis. Furthermore, a friction or brake means (not depicted) may be provided to limit the rotation of the ball 68 and hence the medical instrument 6 around its longitudinal axis, i.e. along ϑ. That is, the friction or brake means may apply a force to the medical instrument 6 against rotation around its longitudinal axis. More generally, the force feedback system (and hence one haptic device) may be adapted to provide force feedback in an additional degree of freedom relating to the rotation of the medical instrument 6 around its longitudinal axis. This may be embodied in both the embodiment having two haptic devices and in the embodiment having one haptic device (which one haptic device would then have a total of six degrees of freedom). That is, in total the force feedback system and the medical simulator may be adapted to provide force feedback, e.g., in five, six or seven degrees of freedom.

As discussed, the medical simulator 2 is adapted to provide force feedback in at least five dimensions or five degrees of freedom. With such a medical simulator 2, a medical procedure as depicted in Figures 1a to 1g can be simulated. To do so, a data processing means (not depicted) may be provided. Said data processing means may be provided with a data set. Said data set may be representative of bodily tissues that may be encountered during a medical procedure to be simulated - that is, the data set may include the data relating to different tissues. As an example, the data set may be a three-dimensional data set, where each voxel (that is a three-dimensional pixel) stores a hardness of the corresponding tissue. In such a data set, voxels corresponding to bony tissue may have a higher value (as bony tissue is harder) than other tissues. As regards the data set, reference is made to above discussed DE 10 2013 004 843 A1, which is incorporated by reference in its entirety.

The simulation of a medical procedure will now be described. During the simulation, the position (i.e., the translational position and the orientation) of the medical instrument 6 is tracked. This may be done by the haptic devices 4, 4' or by other means, such as by optical tracking. By doing so, it may be determined where the (simulated) proximal end 62 of the medical instrument 6 is within the data set. For further details of that, the reader is referred to DE 10 2013 004 843 A1, which is incorporated by reference. E.g., at the beginning of the simulation, the simulated proximal end 62 of the medical instrument 6 is not yet inserted within the body. Thus, it may move relatively freely, that is, the haptic devices 4, 4' will provide no (or only very little) haptic feedback against any movement or medical instrument 6. Once the medical instrument 6 is further advanced, the simulated proximal end 62 of the medical instrument 6 may come into contact with the simulated patient's body, i.e. the data set. Upon such a contact, the force feedback provided by the haptic devices 4, 4' may be larger. When the (real) medical instrument 6 is further advanced, this corresponds to the (simulated) proximal end 62 of the instrument further advancing into the data set of the patient's tissue. The generated force feedback is a function of the (simulated) tissue being present at the (simulated) proximal end 62 of the medical instrument. That is, when the simulated proximal end 62 is in "harder" tissue, there will be a higher force feedback than when the simulated proximal end 62 is in "softer" tissue. Once the real medical instrument 6 is advanced to a location, where the simulated proximal end 62 contacts a bony tissue of the data set (corresponding to Figures 1b, 1d, 1e and 1f) a substantial increase in the force feedback against further advancing the medical instrument 6 may be provided. Thus, the user, i.e. the user to be trained, "feels" the harder bony tissue. In such a position, it may be a lot harder (that is, it may require substantially more force) to advance the medical instrument 6 further. Once the medical instrument 6 is advanced further, which, in the data set corresponds to the proximal end 62 of the simulated medical instrument 6 being inserted into the vertebra 100 (corresponding to Figures 1c and 1g), the haptic devices 4, 4' may "lock" the medical instrument 6 with regard to its orientation - i.e., it may no longer be possible to change the orientation of the medical instrument 6, but it may only be possible to move the medical instrument 6 along its longitudinal axis or direction. This corresponds to the medical instrument 6 being inserted into the bony tissue, which also leads to the medical instrument 6 being no longer pivotable. That is, in such a position, the medical simulator 2 may no longer allow for changing the orientation of the medical instrument 6, that is, it may no longer be possible to pivot and/or tilt the medical instrument 6, but it is only possible to further advance the medical instrument 6 or to retract it in a linear manner. In case the medical instrument 6 is retracted to a point where the (simulated) proximal end 62 is no longer positioned within the vertebra 100 (that corresponds to Figure 1d), it may again be possible to change the orientation of the medical instrument 6 and/or to relocate the medical instrument 6 parallel to the vertebra 100. While this "locking" of the medical instrument 6 has been described with reference to bone tissue, the skilled person will also understand that it is possible to provide such a restriction of the movement of the medical instrument with regard to other kinds of tissues, e.g. cartilage tissue.

This may provide a much more realistic medical simulator, allowing the "locking" of the medical instrument 6 when it is simulated that the proximal end 62 is inserted within bony tissue. Particularly due to the improve realism, new and versatile uses of the medical simulator and of the medical simulation method are possible. In addition to the use in training of medical doctors or medical students, the described medical simulator and described medical simulation method may also be used to train medical doctors for usage with new devices presently unknown or unfamiliar to the doctors. The simulator and the method may also be used for presentation of new medical devices.

In some embodiments, the medical simulator may also be provided with one or more cameras 18 (see Figs. 2 and 4), preferably mounted to said housing 8. However, the at least one camera 18 may also be provided outside the box or housing 8. Said camera(s) may be positioned towards the proximal end section(s) 62 of the medical instrument(s) 6. The camera(s) is/are used to detect one or more additional instruments introduced through the medical instrument(s) 6 and protruding from a proximal end of the medical instrument 6. E.g. through a trocar 6, there may be introduced additional instruments, such as a tumor ablation probe or others, depending on the simulated medical procedure, that may be detected by the camera(s) 18. That is, the cameras 18 may be used to detect the insertion of additional instruments. Furthermore, the cameras 18 may also be used to detect which movements the instruments perform; e.g. the (introduced) instrument may be moved, for example in a forward or rearward direction, an end portion of the (introduced) instrument may be bent and/or the (introduced) instrument may be rotated. The at least one camera 18 may also be used to detect the medical instrument 6 and/or the movement of the medical instrument 6 itself, e.g. it may detect whether the medical instrument 6 is a trocar or another instrument (e.g. a medical forceps) and/or may detect the movement of such medical instruments.

In some embodiments, a monitor may be provided as part of the medical simulator 2 (not depicted). Said monitor may display a representation of the data set relating to body tissue and the (simulated) location of the medical instrument 6 within said data set. It is particularly preferred that the picture displayed on the monitor closely resembles or corresponds to a picture which would be obtained by a medical imaging method (such as CT, MRT, etc.), which was to be used during the real medical procedure.

In the foregoing, a medical simulator 2 comprising two haptic devices 4, 4' connected to one medical instrument 6 has been described. The haptic device(s) 4, 4' providing force feedback to one medical instrument are also referred to as one force feedback system herein. However, this embodiment is not the only embodiment envisaged. To the contrary, and as depicted, e.g. in Figure 4 to 7, it is also possible to provide two (or more) medical instruments 6, 61 each of which is connected to one force feedback system, each system comprising two haptic devices 4, 4' and 41, 41', respectively. As described above, it is not necessary that each medical instrument 6, 61 is connected to two haptic devices for 4, 4', 41, 41', but, in alternative embodiments, it may be sufficient that each medical instrument 6, 61 is connected to one haptice device (not depicted) providing force feedback in at least five dimensions or five degrees of freedom. The embodiment having two (or more) medical instruments 6, 61 that are simulated may provide for the simulation of more complex medical procedures, where more than one medical instrument is to be used.

In one embodiment, the medical simulator 2 may further be adapted to provide an audible feedback to the user of the medical simulator. That is, the medical simulator 2 may be provided with a loudspeaker or headphones (not depicted). Thus, the medical simulator 2 may be adapted to provide audible feedback to the user. More particularly, the medical simulator 2 may be adapted to provide a feedback as regards the (simulated) position of the proximal end 62 of the medical instrument 6 within the data set, which data set may be obtained, e.g., by computer tomography (CT). For example, the user may simply be "told" in which tissue the simulated proximal end 62 of the medical instrument is. Alternatively, another audible signal may be provided to the user - e.g. a frequency or volume of the audible signal changes in dependence of the tissue where the (simulated) proximal end 62 of the surgical instrument 6 is.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "essentially radial" shall also cover exactly radial). Where different steps of a method or procedure are recited, the steps are preferably, but not necessarily, performed in the order in which they appear in the text.

## Claims

1. Medical simulator comprising
a medical instrument,
a force feedback system adapted to provide force feedback in at least five degrees of freedom,
wherein the force feedback system is connected to the medical instrument.

2. The medical simulator according to claim 1,
wherein the force feedback system comprises a first haptic device adapted to provide force feedback and a second haptic device adapted to provide force feedback,
wherein the medical instrument is connected to the first haptic device at a first connection location and to the second haptic device at a second connection location distanced from the first location,
wherein the simulator further comprises a housing,
wherein the first haptic device is located in the space defined by said housing and the second haptic device is located on said housing,
wherein the medical instrument extends from a location outside said housing to a location within said space defined by said housing,
wherein the first connection location is located in the space defined by said housing and the second connection location is located outside said housing.

3. The medical simulator according to claim 1, wherein the force feedback system comprises a haptic device adapted to provide force feedback in five, six or seven degrees of freedom.

4. The medical simulator according to any of the preceding claims, wherein the force feedback system is adapted to provide force feedback against a rotation of the medical instrument around a longitudinal axis of the medical instrument

5. The medical simulator according to any of the preceding claims, wherein the medical instrument is a trocar.

6. The medical simulator according to any of the preceding claims, wherein the simulator further comprises a data processing means and a data storage means, wherein the data storage means includes a data set representative of bodily tissue and wherein the simulator is adapted to simulate a location of a portion of the medical instrument within said data set.

7. The medical simulator according to the preceding claim, wherein the simulator further comprises a sound output and the simulator is adapted to adapt an output sound in dependence of the location of the portion of the medical instrument within said data set.

8. The medical simulator according to any of the 2 preceding claims, wherein the simulator further comprises a visual data output means outputting an image representative of the data set and the location of the medical instrument within said data set.

9. The medical simulator according to any of the preceding claims, wherein the simulator comprises
a plurality of medical instruments,
a plurality of force feedback systems, wherein the number of medical instruments equals the number of force feedback systems,
wherein each force feedback system is connected to one medical instrument.

10. The medical simulator according to claim 9, wherein the medical simulator comprises any of the feature set out in claims 1 to 8 for at least one and preferably each of the combinations of one medical instrument and one force feedback system.

11. The medical simulator according to any of the preceding claims, wherein the medical simulator comprises at least one camera adapted and positioned to detect the medical instrument(s) and movements of the medical instrument(s) and/or wherein the at least one camera is adapted and positioned to detect additional instruments introduced into the medical instrument(s) and movements of the additional instruments.

12. Medical simulation method comprising the step of
providing a medical simulator according to any of the preceding claims.

13. Method according to the preceding claim and further comprising the steps of providing a three-dimensional data set representative of bodily tissue,
simulating a position of the portion of the medical instrument within the data set. restricting movement and/or rotation of the medical instrument by the force feedback, wherein said restriction occurs, when a simulated position of a portion of the medical instrument is located within a portion of the data set representing a particular kind of tissue, e.g. bone tissue.

14. Use of the medical simulator or the medical simulation method according to any of the preceding claims, said use being a training of medical personnel for training a medical intervention, a presentation of a medical instrument or a training of medical personnel with an instrument unfamiliar to the medical personnel.
